# EUROPEAN PATENT SPECIFICATION

(11) **EP 2 597 940 B1**
(45) Date of publication and mention of the grant of the patent: **11.03.2015**
(21) Application number: 11749545.7
(22) Date of filing: 28.07.2011
(51) Int. Cl.: A01C 15/04, A01M 9/00, B05B 7/14

(54) **MACHINE FOR DISTRIBUTING POWDERS IN AGRICULTURE**
MASCHINE ZUR PULVERVERTEILUNG IN DER LANDWIRTSCHAFT
MACHINE CONÇUE POUR DISTRIBUER DES PRODUITS EN POUDRE DANS LE DOMAINE DE L'AGRICULTURE

(30) Priority: 29.07.2010 IT FG20100003
(43) Date of publication of application: 05.06.2013
(73) Proprietor: Del Giudice, Michele Antonio, 71016 San Severo FG (IT)
(72) Inventor: Del Giudice, Michele Antonio, 71016 San Severo FG (IT)
(74) Representative: Papa, Elisabetta
(86) International application number: PCT/IB2011/053368
(87) International publication number: WO 2012/014173

(56) References cited:
- EP-A2- 0 219 015
- WO-A1-99/15987
- GB-A- 655 034
- US-A- 1 600 014
- US-A- 2 359 520
- US-A- 2 678 238
- US-A- 4 593 786
- US-A- 5 975 230

## Description

### Technical Field of the Invention

The present invention refers to a dusting machine of the type used in agriculture for distributing powder products, in particular for diffusing pesticides or other substances on a tilled field.

### Background of the Invention

Known dusting machines are comprised of a generally stationary tank, containing the powder to be distributed, and of systems of mechanical, pneumatic or "mixed" mechanical-pneumatic type for extracting the powder from the tank.

In case of a mechanical extraction, inside the tank generally a stirring means is present in order to allow the powder to evenly arrive at an outlet of the tank itself. In the pneumatic case, a forced extraction of the powder from the tank is had by action of a fan-generated airstream. Finally, in the mechanical-pneumatic case, typically the powder mass contained in the stationary tank is moved by a fan-generated airstream and extracted from the bottom of the tank through augers.

Such known dusting machines entail several drawbacks.

Firstly, the powder, by tending to compact in correspondence of the extraction augers, creates void zones inside the augers themselves, at first reducing the amount of powder actually distributed. However, such voids then tend to briskly fill up with powder, due to machine jolting which causes a sudden and concomitant fall of all the powder initially compacted. Moreover the powders, by transiting into the fan, stick to it causing unbalancing and subsequent destruction thereof.

This entails a non-rational use of the powders, as inside the tank the product exhibits different degrees of compactness on different points of the tank itself, and therefore the powder distributed is neither homogeneous nor of constant density.

Said drawback also reduces the variety of useful powders, in fact imposing the use of a single powder or of premixed combinations, to the detriment of the effectiveness, variety and, ultimately, quality of treatments that can be carried out.

Moreover, it is nearly impossible to accurately know the weight of powder dispensed during on-field distribution.

Also (but not only) due to said drawbacks, known machines do not allow to obtain a satisfactory adjustment of the dose of powder dispensed. Accordingly, the risk is run of sending on the cultures product in excess, with the danger of damaging the plant, or on the contrary too little of a product, with the consequence of actually not carrying out the desired treatment.

US 2,359,520 discloses a crop dusting machine comprising a rotatable drum with an internal fin directing the material onto inwardly projecting blades. A power drive shaft extends longitudinally in the drum.

### Summary of the Invention

Therefore, the technical problem set and solved by the present invention is that of providing a dusting machine allowing to overcome the drawbacks mentioned above with reference to the known art, and in particular allowing a satisfactory adjustment of the amount of powder product dispensed.

Such a problem is solved by a dusting machine according to claim 1.

Preferred features of the present invention are set forth in the dependent claims thereof.

The present invention provides some relevant advantages. The main advantage lies in the fact that it allows a homogeneous mixing of the powder and a reliable controlling of the dose of powder dispensed, concomitantly preventing a compacting of the powder itself on machine components.

This is obtained in particular by combining a rotary powder tank with dedicated controlling means, allowing to manage the dosage on the basis of the rate of means for extracting the product from the tank, and of the speed of the agricultural vehicle carrying the machine.

The rotary tank, preferably internally provided with one or more helical vanes for mixing, sets the product in rotation and carries out a complete and homogeneous mixing thereof, preventing its compacting. Accordingly, inside the tank it is also possible to mix different products, whereby the known-art constraint of using premixed products only is overcome.

Preferably, always in order to avoid powder compacting, an extracting from the tank is provided in correspondence of an outlet portion placed centrally to the tank itself, so as not to have the weight of the entire volume of powder received in the tank bear down in correspondence of the extraction zone.

Moreover, always according to a preferred embodiment, the means for extracting powder from the tank is based on augers or equivalent means housed in a casing provided with one or more openings for powder inletting. Said one or more openings allow an overflowing of excess product into the tank itself, so that a constant amount of product be extracted.

Again, advantageously in a preferred embodiment the dusting machine provides a mechanical extraction system combined with a pneumatic-type system for conveying powders to the outside. In this latter system, the environment in which the carrier flow is generated by a fan or an equivalent means is separated from the environment in which said flow contacts the powder to entrain it. Thus, any possibility of powder compacting on the fan is prevented.

Other advantages, features and the operation steps of the present invention will be made apparent in the following detailed description of some embodiments thereof, given by way of example and not for limitative purposes.

### Brief description of the figures

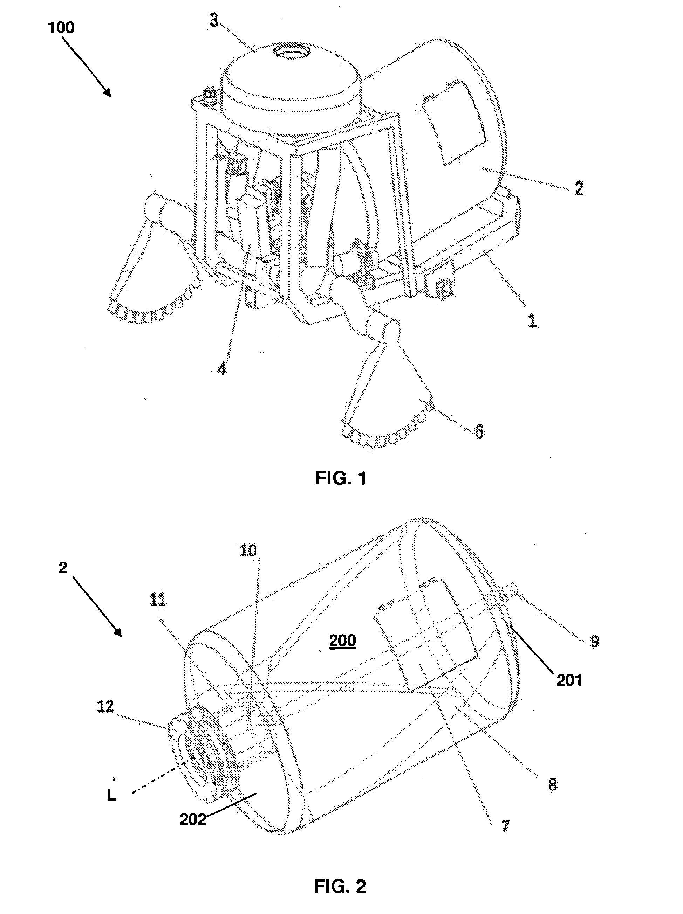

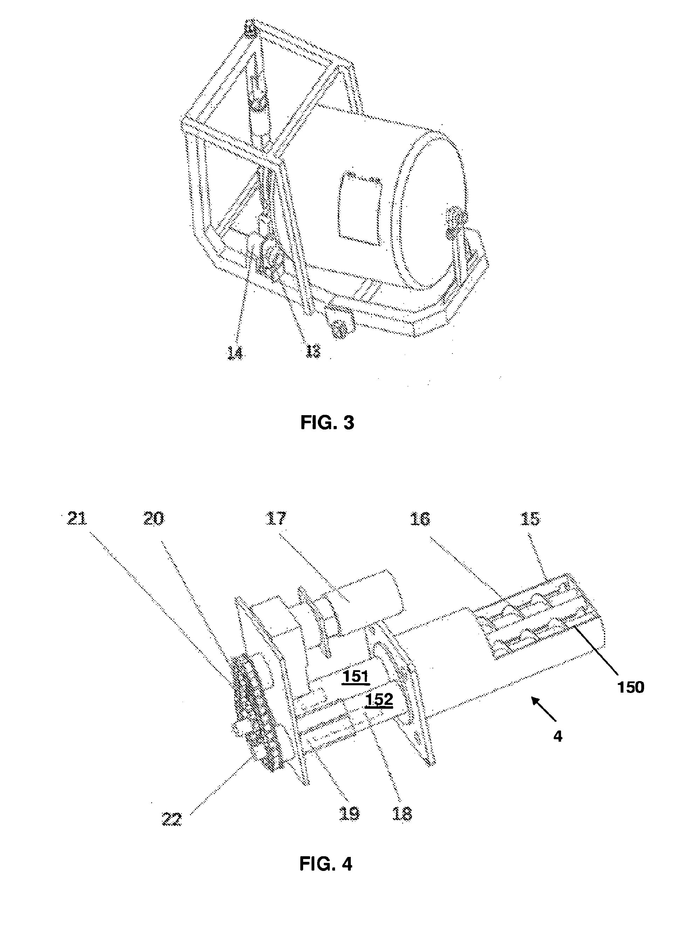

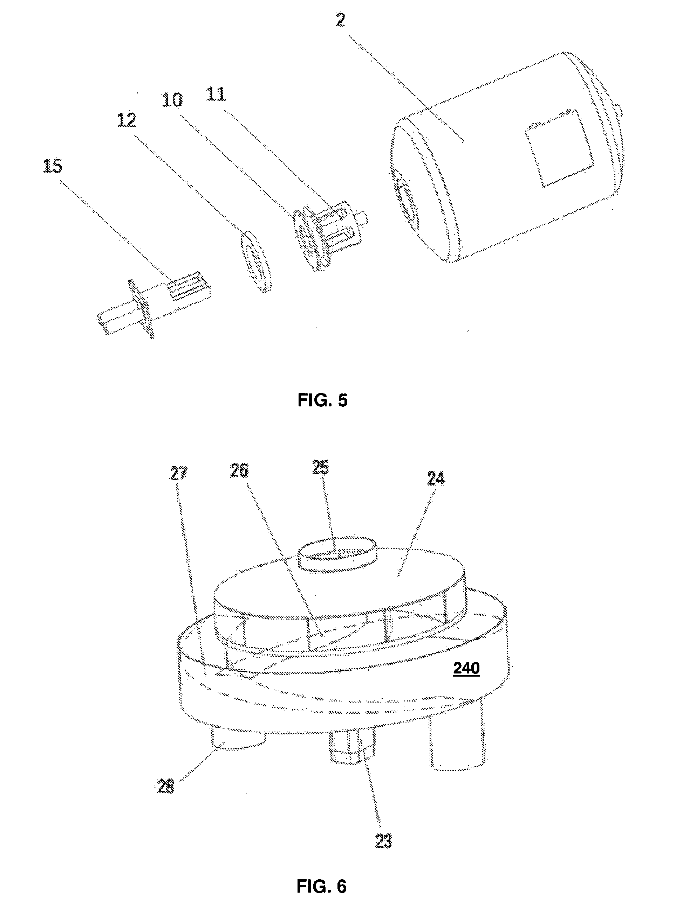

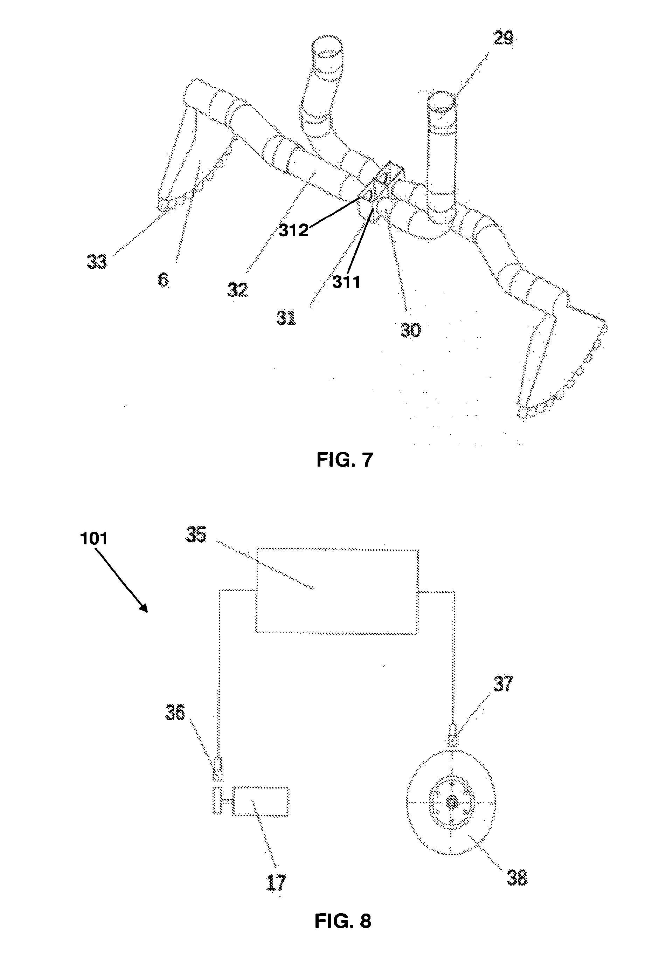

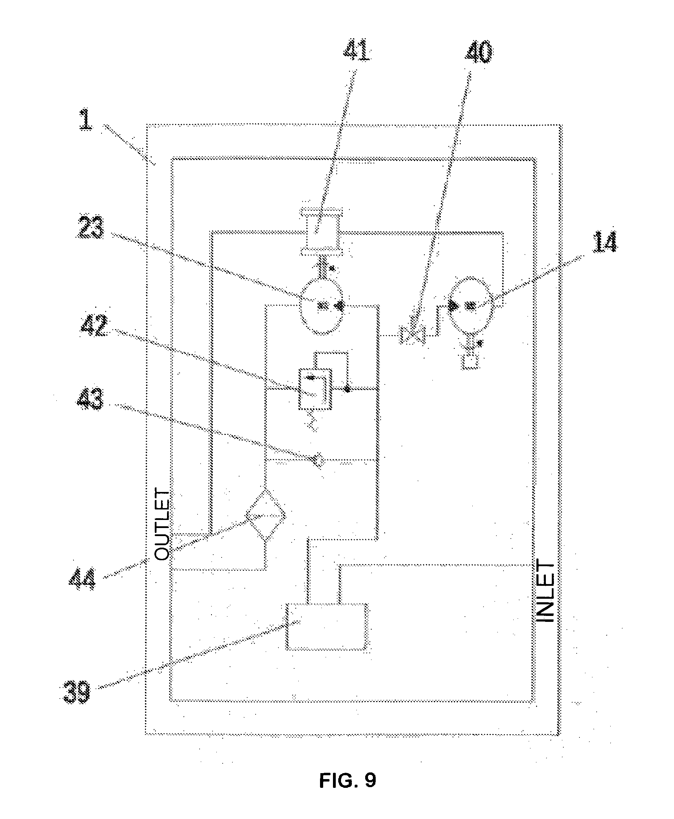

Reference will be made to the figures of the annexed drawings, wherein:
▪ Figure 1 shows a front perspective view of a preferred embodiment of a dusting machine according to the present invention;
▪ Figure 2 shows a perspective view in partial transparency of a rotary tank of the machine of Figure 1, in which can be seen vanes internal to the tank itself and support systems thereof;
▪ Figure 3 shows a perspective view of part of the machine of Figure 1, in which can be seen means used to generate tank rotation;
▪ Figure 4 shows a perspective view of another part of the machine of Figure 1, in which can be seen a system for extracting the product from the tank by means of augers;
▪ Figure 5 shows an exploded view of the tank and of the product-extracting system of the machine of Figure 1;
▪ Figure 6 shows a perspective view in partial transparency of part of a ventilation system of the machine of Figure 1, with a closure cover removed for greater clarity;
▪ Figure 7 shows a perspective view of a detail of a system for delivering powder to the outside of the machine of Figure 1;
▪ Figure 8 shows a block schematic depiction of a system for adjusting the powder outflow of the machine of Figure 1; and
▪ Figure 9 shows a block schematic representation of an oleodynamic circuit of the machine of Figure 1.

### Detailed description of preferred embodiments

Initially referring to Figure 1, a dusting machine of the type used in agriculture for distributing powder products, e.g. pesticides, according to a preferred embodiment of the invention is generally denoted by 100. The dusting machine 100 is apt to be mounted on an agricultural vehicle, e.g. a tractor, for distributing powders on a tilled field crossed by the same vehicle.

The dusting machine 100 comprises first of all:
- a rotary tank 2 for powders, apt to produce a mixing of the same powders by virtue of its own rotary motion;
- means for extracting the powders from the tank 2, generally denoted by 4, which in the present example is of mechanical type;
- means for conveying powder to the outside, generally denoted by 3, arranged downstream of the extracting means 4, which conveying means in the present example is of pneumatic type and is apt to feed the powders extracted from the tank 2 to end diffusers 6; and
- means 101 for controlling the dose of powder dispensed to the outside - schematized in Figure 8 - apt to determine the dose dispensed and/or to be dispensed on the basis of the extraction rate of the extracting means 4 and of the advancing speed of a vehicle carrying the dusting machine 100.

The components of the machine 100 introduced hereto are mounted on a support 1 having a pipe structure. Preferably, said structure acts also as a reservoir of oil for a single oleodynamic circuit for the tank 2 and the conveying means 3 to the ends of their actuation, as will be better explained hereinafter referring to Figure 9.

Each of the components introduced hereto will now be described in greater detail.

Referring to Figure 2, in the present example the tank 2 has a substantially cylindrical geometry, with a lateral skirt 200 developing along a longitudinal axis L, and a first and a second base, respectively 201 and 202, preferably having a vaulted or cap-like development. The longitudinal axis L defines also the axis of rotation of the tank 2.

The tank 2 bears, in correspondence of its lateral skirt 200, a loading hatch 7 selectively openable for introduction of powders into the same tank.

The tank 2 has mixing means, preferably applied in correspondence of the internal surface of the skirt 200. In the example depicted, the mixing means is in the form of vanes 8 having a helical development, in particular three vanes that are wound up longitudinally just in correspondence of the internal part of the lateral skirt of the tank itself. Such vanes 8, or alike mixing means, prevent powder compacting and drive the powders in order to feed them to an extracting bush 10 that extends into the tank 2 and will presently be described.

In correspondence of the first base 201, the tank 2 is rigidly splined onto a shaft 9 extending along the longitudinal axis L of the same tank. In correspondence of or near to the second base 202, the shaft 9 is fixed, e.g. welded, on a base of the bush 10. On the opposite side, the latter in turn is fixed, e.g. bolted, on a fifth wheel 12 or equivalent means.

Referring also to Figure 3, the tank 2 is set in rotation by actuating means, preferably by an oleodynamic motor 14. The motor 14 sets in rotation, directly with a crown gear splined onto the fifth wheel or by interposition of drive means, a wheel 13 or other rolling means having a high coefficient of friction (e.g., of rubber), which in turn engages the lateral skirt 200 of the tank 2 dragging the latter in rotation just by static friction.

The tank 2 may be made of metal, preferably of stainless steel.

Referring also to Figures 4 and 5, the extracting bush 10 is substantially in the form of an elongated member extending longitudinally into the tank 2, substantially from the second base 202 thereof and in a position transversally centered with respect thereto. The bush is provided with longitudinal openings 11 for powder extraction.

In particular, the powders are driven by the vanes 8 toward the bush 10 and then through the openings 11 thereof, and fall into the above-mentioned extracting means 4.

As already mentioned, in the present example the extracting means 4 is of mechanical type. In particular, it comprises a pair of augers 16 received in a support 15 defining their seat. The support 15 is provided with an inlet opening 150. In the present example, the opening 150 is arranged in correspondence of a top portion of the support 15 facing onto the bush 10. Variant embodiments can provide two or more powder-inletting openings instead of a single opening.

The support 15 is partially inserted into the tank 2 in correspondence of the bush 10 thereof, so that the powders fall, through the openings 11 of the bush 10, into the opening 150 of the same support 15.

As mentioned in the introduction, this arrangement of parts, particularly owing to the use of an auger support 15 provided with one or more openings 150 facing into the tank 2, allows an overflowing of excess powder into the same tank 2.

The powder fallen into the seat of the augers 16 is brought out of the tank 2 by their screw-like motion.

The motion of the augers 16 is obtained by dedicated actuating means, in the present example an electric motor 17 connected to the same augers by suitable drive means. In the present example, the motor 17 controls a driving pinion 20 which, by means of a chain 21, sets in rotation two driven pinions 22, each rigidly splined on a respective auger 16.

In correspondence of the end of the augers 16 lying, in use, opposite to the end inserted into the tank 2, the support 15 splits into two portions, respectively 151 and 152, each of a substantially tubular shape and apt to receive a respective auger 16. Each of said portions provides a respective powder outlet opening or orifice 18, which in the present example is arranged in correspondence of a bottom part of the respective support portion 151 or 152.

Moreover, in the example depicted in Figure 4 a baffle 19 is provided, arranged in correspondence of only one of the outlet openings 18 and apt to allow flow diversion into the other ejector. This allows, as will presently be better understood, product ejection to the outside from a single side of the machine 100.

From the outlet openings 18 of the extracting means 4, the powders fall into respective means for connecting with the conveying means 3. Such connecting means is depicted in Figure 7 and denoted therein by 31, and will presently be described in greater detail.

Referring to Figure 6, the conveying means 3 is apt to generate a carrier flow of powders for their feeding to the outside. To this end, said means 3 comprises a high-pressure fan or impeller 24, or an equivalent means, housed in a casing 240. The fan 24 is apt to generate a carrier flow of air. In particular, air is collected from the outside through an inlet 25 obtained in the casing 240 and is propelled by the vanes 26 of the fan 24 through ducts 27. The latter are preferably obtained into the casing 240 and have a substantially helical development. They feed the carrier flow into outlet pipes 28.

The conveying means 3, and in particular the fan 24 thereof, is driven by oleodynamic actuating means, in particular by a hydraulic motor 23.

The oleodynamic circuit allowing actuation of the conveying means 3, as well as of the tank 2, is schematized in Figure 9. It comprises a pump 39 drawing oil from a reservoir. As mentioned above, the frame 1 is advantageously used for this purpose. Oil is sent to the motor 23, which actuates the fan 24 of the conveying means 3. Moreover, oil is also sent, through a pressure-compensated faucet 40 or an equivalent means, to the motor 14 which rotates the tank 2. The compensated faucet 40 allows to adjust the number of revolutions of the tank 2. Variant embodiments may provide different adjustment means.

Waste oil of the motor 14 is fed into a hub 41 in which support bearings of the fan 24 are housed, lubricating them.

A relief valve 42, a check valve 43 set in parallel to the relief valve 42, and one or more waste oil filters 44 are also present in the circuit.

Turning now to follow the route travelled by powders in the machine, and referring to Figure 7, as mentioned the powders are sent by the extracting means 4 into elements 31 for connecting with the conveying means 3. Such connecting elements 31 are substantially in the form of receptacles provided with a flow inlet and outlet, respectively 311 and 312. Two connecting elements 31 are provided, one for each of the two augers 16.

The outlet pipes 28 for the carrier flow of air generated by the fan 24 are connected to further pipes or ducts 29, extension of the pipes 28. Said further pipes 29 feed the carrier flow, each to a respective connecting element 31 in correspondence of the inlet 311. In correspondence of or near to the mouth of the connecting element 31, each pipe 29 has a portion 30 having a tapered section, in particular decreasing in the direction of the carrier flow, implementing a Venturi effect. Thus, carrier flow velocity increases just in correspondence of the contact with the powders, improving the entraining effect, i.e., the effect of conveying said powders to the outside.

At the flow outlet 312 of each connection element 31, a collecting pipe 32 is connected, in turn in communication with a diffuser 6 which distributes the powders, just diffusing them, to the outside through a plurality of dispensing orifices 33.

Therefore, it will be appreciated that the overall arrangement is such that the means 24 for generating a carrier flow is arranged in a first environment of the machine 100 separated from a second environment of the machine, corresponding to the connecting elements 31, in which the carrier flow contacts the powder in order to entrain it.

Figure 8 shows a diagram related to means 101 for controlling the dose of powder dispensed. In the present example, said means 101 comprises an electronic control unit 35, optionally powered by the same vehicle carrying the machine 100. The controlling means 101 further comprises means 36 for detecting the rate of the extracting augers 16 and means 37 for detecting the speed of the vehicle. More specifically, there are provided a sensor 36 measuring the number of revolutions of the electric motor 17 actuating the augers 16, and a sensor 37 measuring the number of revolutions of the vehicle wheel.

The electronic control unit 35 processes detected signals and can output data allowing a user to perform an adjustment. In particular, the signals can be combined with data preset by the operator - in particular the specific weight of the product- in order to output information on the amount in weight of the product that is being dispensed. The user can then perform an adjustment by activating a potentiometer or an equivalent means placed on the control unit itself and apt to act on the number of revolutions of the electric motor 17, and therefore ultimately on the extraction rate of the product from the tank, or even, if appropriate, on the rotation rate of the latter.

In a variant embodiment, the same control unit 35 processes and sends an adjustment signal to the electric motor 17 actuating the augers 16, on the basis of data reset by the user and related to specific powder distribution needs, as well as to properties of the powders, e.g. the specific weight as mentioned above. Therefore, in such a case the controlling means 101 allow the setting of the desired amount to be distributed and automatically adjust powder dispensing as vehicle speed changes, by acting on the rate of the augers or anyhow of the extracting means adopted.

Preferably, the control means 101 provides a visualization device, e.g. a display, allowing to indicate the amount of product dispensed during tillage.

The present invention has hereto been described with reference to preferred embodiments thereof. It is understood that other embodiments might exist, all falling within the concept of the same invention, as defined by the protective scope of the claims hereinafter.

## Claims

1. A dusting machine (100) of the type used in agriculture for distributing powder products, comprising:
- a rotary powder tank (2), apt to produce a mixing of the powder introduced therein;
- means (4) for extracting powder from said tank (2);
- means (101) for controlling the dose of powder dispensed to the outside, apt to determine the dose dispensed and/or to be dispensed on the basis of the extraction speed of said extracting means (4) and of the advancing speed of a vehicle carrying the dusting machine (100); and
- means (3) for conveying the powder to the outside, arranged downstream of said extracting means (4), which conveying means (3) is of pneumatic type and comprises means (24) for generating a carrier flow, preferably of air, for conveying the powder to outside diffusion,
**characterised in that** the overall arrangement is such that said means (24) for generating a carrier flow (24) is arranged in a first environment (240) of the machine separated from a second environment (31) of the machine in which the carrier flow contacts the powder to entrain it.

2. The dusting machine (100) according to claim 1, wherein said rotary tank (2) has mixing means, preferably applied in correspondence of an internal lateral surface thereof and preferably in the form of one or more vanes (8) having a helical development.

3. The dusting machine (100) according to claim 1 or 2, wherein said extracting means (4) is at least partially received into said tank (2).

4. The dusting machine (100) according to any one of the preceding claims, wherein the overall arrangement of said extracting means (4) is such that the powder is extracted from said tank (2) in correspondence of a central portion (202) thereof.

5. The dusting machine (100) according to any one of the preceding claims, wherein said extracting means (4) comprises a mechanism for extracting from said tank (2), preferably of auger or augers (16) type.

6. The dusting machine (100) according to the preceding claim, wherein the overall arrangement is such that the powder is introduced into said extraction mechanism (16) in correspondence of one or more openings (150) thereof allowing an overflowing of excess powder into said tank (2).

7. The dusting machine (100) according to any of the preceding claims, comprising an oleodynamic circuit of actuation in common for said rotary tank (2) and for said conveying means (3).

8. The dusting machine (100) according to any of the preceding claims, wherein the overall arrangement is such that the carrier flow contacts the powder downstream of one or more ducts (28, 29) having a decreasing end section (30).

9. The dusting machine (100) according to any one of the preceding claims, wherein said extracting means (4) and/or said conveying means (3) provide a dual path (16, 29, 32) for conveying the powder, to allow a bilateral dispensing thereof.

10. The dusting machine (100) according to the preceding claim, comprising partializing means (19) for adjusting the amount of powder fed into at least one of said paths.

11. The dusting machine (100) according to any one of the preceding claims, wherein said means (101) for controlling the dose of powder dispensed comprises means for detecting the extraction rate of said extracting means (4) and/or the speed of the vehicle carrying the machine.

12. The dusting machine (100) according to any one of the preceding claims, comprising a support (1) which preferably acts also as a reservoir of oil for an oleodynamic actuation circuit.

13. An agricultural vehicle comprising a dusting machine (100) according to any one of the preceding claims.

## Patentansprüche

1. Staubverteilungsmaschine (100) des in der Landwirtschaft verwendeten Typs zum Verteilen von Pulverprodukten, umfassend:
- einen drehbaren Pulvertank (2), der geeignet ist eine Mischung des ihm zugeführten Pulvers zu erzeugen;
- Mittel (4) zum Extrahieren von Pulver aus dem Tank (2);
- Mittel (101) zum Steuern der Dosis an nach außen abgegebenem Pulver, die geeignet sind, die abgegebene und/oder abzugebende Dosis auf der Grundlage der Extraktionsgeschwindigkeit der Extraktionsmittel (4) und der Fortbewegungsgeschwindigkeit eines Fahrzeugs zu bestimmen, das die Staubverteilungsmaschine (100) trägt; und
- Mittel (3) zum Fördern des Pulvers nach außen, die stromabwärts von den Extraktionsmitteln (4) angeordnet sind, wobei die Fördermittel (3) pneumatisch sind und Mittel (24) zum Erzeugen eines Trägerflusses umfassen, vorzugsweise aus Luft, zum Fördern des Pulvers zur Außendiffusion,
**dadurch gekennzeichnet, dass** die Gesamtanordnung derart ist, dass die Mittel (24) zum Erzeugen eines Trägerflusses (24) in einer ersten Umgebung (240) der Maschine angeordnet sind, die von einer zweiten Umgebung (31) der Maschine getrennt ist, in der der Trägerfluss das Pulver kontaktiert, um es mitzunehmen.

2. Staubverteilungsmaschine (100) nach Anspruch 1, wobei der drehbare Tank (2) Vermischungsmittel aufweist, die vorzugsweise korrespondierend zu einer inneren lateralen Oberfläche derselben und vorzugsweise in der Form von einer oder mehreren Schaufeln (8) angewendet werden, die eine spiralförmige Ausbildung aufweisen.

3. Staubverteilungsmaschine (100) nach Anspruch 1 oder 2, wobei die Extraktionsmittel (4) wenigstens teilweise in dem Tank (2) aufgenommen sind.

4. Staubverteilungsmaschine (100) nach einem der vorangehenden Ansprüche, wobei die Gesamtanordnung der Extraktionsmittel (4) derart ist, dass das Pulver aus dem Tank (2) korrespondierend zu einem zentralen Abschnitt (202) desselben extrahiert wird.

5. Staubverteilungsmaschine (100) nach einem der vorangehenden Ansprüche, wobei die Extraktionsmittel (4) einen Mechanismus zum Extrahieren aus dem Tank (2) umfassen, der vorzugsweise ein Bohrer oder vom Typ eines Bohrers (16) ist.

6. Staubverteilungsmaschine (100) nach dem vorangehenden Anspruch, wobei die Gesamtanordnung derart ist, dass das Pulver in dem Extraktionsmechanismus (16) korrespondierend zu einer oder mehreren Öffnungen (150) desselben eingeführt wird, wodurch ein Überlaufen von überschüssigem Pulver in den Tank (2) gestattet wird.

7. Staubverteilungsmaschine (100) nach einem der vorangehenden Ansprüche, die einen oleodynamischen Aktuatorkreis umfasst, der dem drehbaren Tank (2) und den Fördermitteln (3) gemeinsam ist.

8. Staubverteilungsmaschine (100) nach einem der vorangehenden Ansprüche, wobei die Gesamtanordnung derart ist, dass der Trägerfluss das Pulver stromabwärts von einer oder mehreren Führungen (28, 29) kontaktiert, die einen absteigenden Endabschnitt (30) aufweisen.

9. Staubverteilungsmaschine (100) nach einem der vorangehenden Ansprüche, wobei die Extraktionsmittel (4) und/oder die Fördermittel (3) einen dualen Pfad (16, 29, 32) zum Fördern des Pulvers zur Verfügung stellen, um eine zweiseitige Abgabe desselben zu erlauben.

10. Staubverteilungsmaschine (100) nach dem vorangehenden Anspruch, die Aufteilungsmittel (19) zum Einstellen der Menge an Pulver umfasst, das wenigstens einem der Pfade zugeführt wird.

11. Staubverteilungsmaschine (100) nach einem der vorangehenden Ansprüche, wobei die Mittel (101) zum Steuern der Dosis an abgegebenem Pulver Mittel zum Erfassen der Extraktionsrate der Extraktionsmittel (4) und/oder der Geschwindigkeit des die Maschine tragenden Fahrzeugs umfassen.

12. Staubverteilungsmaschine (100) nach einem der vorangehenden Ansprüche, die einen Rahmen/eine Auflage (1) umfasst, der/die vorzugsweise auch als ein Behälter für Öl für einen oleodynamischen Aktuatorkreis fungiert.

13. Landwirtschaftliches Fahrzeug umfassend eine Staubverteilungsmaschine (100) nach einem der vorangehenden Ansprüche.

## Revendications

1. Poudreuse (100) du type à usage agricole pour répandre des produits pulvérulents, comportant :
- un réservoir rotatif (2) de poudre apte à réaliser un mélange de la poudre qui y est introduite ;
- un moyen (4) pour extraire de la poudre dudit réservoir (2) ;
- un moyen (101) pour doser la poudre distribuée à l'extérieur, apte à déterminer la dose distribuée et/ou à distribuer d'après la vitesse d'extraction dudit moyen d'extraction (4) et/ou la vitesse de progression d'un engin portant la poudreuse (100) ; et
- un moyen (3) pour acheminer la poudre jusqu'à l'extérieur, disposé en aval dudit moyen d'extraction (4), lequel moyen d'acheminement (3) est de type pneumatique et comprend un moyen (24) pour créer un flux vecteur, de préférence d'air, pour acheminer la poudre jusqu'à la disperser à l'extérieur,
**caractérisé en ce que** l'agencement global est tel que ledit moyen (24) pour créer un flux vecteur (24) est disposé dans un premier volume (240) de la poudreuse, séparé d'un second volume (31) de la poudreuse dans lequel le flux vecteur vient au contact de la poudre pour l'entraîner.

2. Poudreuse (100) selon la revendication 1, dans laquelle ledit réservoir rotatif (2) a des moyens de mélange, de préférence employés en regard d'une surface latérale interne de celui-ci et de préférence sous la forme d'une ou de plusieurs pales (8) à développement hélicoïdal.

3. Poudreuse (100) selon la revendication 1 ou 2, dans laquelle ledit moyen d'extraction (4) est au moins partiellement logé dans ledit réservoir (2).

4. Poudreuse (100) selon l'une quelconque des revendications précédentes, dans laquelle l'agencement global dudit moyen d'extraction (4) est tel que la poudre est extraite dudit réservoir (2) en regard d'une partie centrale (202) de celui-ci.

5. Poudreuse (100) selon l'une quelconque des revendications précédentes, dans laquelle ledit moyen d'extraction (4) comprend un mécanisme pour extraire à partir dudit réservoir (2), de préférence du type à une ou plusieurs vis sans fin (16).

6. Poudreuse (100) selon la revendication précédente, dans laquelle l'agencement global est tel que la poudre est introduite dans ledit mécanisme d'extraction (16) en regard d'une ou de plusieurs ouvertures (150) de celui-ci, en permettant un débordement d'excédent de poudre retombant dans ledit réservoir (2).

7. Poudreuse (100) selon l'une quelconque des revendications précédentes, comportant un circuit oléodynamique d'actionnement commun audit réservoir rotatif (2) et audit moyen d'acheminement (3).

8. Poudreuse (100) selon l'une quelconque des revendications précédentes, dans laquelle l'agencement global est tel que le flux vecteur arrive au contact de la poudre en aval d'un ou de plusieurs conduits (28, 29) à section (30) diminuant vers l'extrémité.

9. Poudreuse (100) selon l'une quelconque des revendications précédentes, dans laquelle ledit moyen d'extraction (4) et/ou ledit moyen d'acheminement (3) crée(nt) un double parcours (16, 29, 32) pour acheminer la poudre, afin de permettre une distribution bilatérale de celle-ci.

10. Poudreuse (100) selon la revendication précédente, comportant un moyen de segmentation (19) pour ajuster la quantité de poudre introduite sur au moins un desdits parcours.

11. Poudreuse (100) selon l'une quelconque des revendications précédentes, dans laquelle ledit moyen (101) pour doser la poudre distribuée comprend un moyen pour détecter la vitesse d'extraction dudit moyen d'extraction (4) et/ou la vitesse de l'engin portant la poudreuse.

12. Poudreuse (100) selon l'une quelconque des revendications précédentes, comportant un support (1) qui, de préférence, sert également de réservoir d'huile pour le circuit oléodynamique d'actionnement.

13. Engin agricole comportant une poudreuse (100) selon l'une quelconque des revendications précédentes.
